# EUROPÄISCHE PATENTANMELDUNG

(11) **EP 2 143 520 A1**
(43) Veröffentlichungstag der Anmeldung: **13.01.2010**
(21) Anmeldenummer: 09013428.9
(22) Anmeldetag: 29.12.2006
(51) Int. Cl.: B23K 26/38, F01D 5/18

(54) **Verfahren zur Herstellung eines Lochs**

(30) Priorität: 10.01.2006 EP 06000406
(62) Teilanmeldung aus: 06841655.1
(71) Anmelder: SIEMENS AKTIENGESELLSCHAFT, 80333 München (DE)
(72) Erfinder: Beck, Thomas, 16341 Panketal (DE); Cox, Nigel-Philip, 45468 Mülheim an der Ruhr (DE); Settegast, Silke, 10439 Berlin (DE)

(57) **Zusammenfassung**

Es gibt eine Vielzahl von Methoden, um Durchgangslöcher herzustellen. Insbesondere bei der Erzeugung einer Vielzahl von Filmkühllöchern, wie bei Gasturbinenschaufeln oder Brennkammerelementen spielen auch kleine zeitliche Vorteile bei der Herstellung eines Lochs eine Rolle.
Das erfindungsgemäße Verfahren, das Loch (7) jeweils abschnittsweise in einem oberen (13) und einem unteren Bereich (10) Endkonturnah herzustellen, um dann mit anderen Laserparametern die Endkontur herzustellen, erzielt zeitliche Vorteile.

## Beschreibung

Die Erfindung betrifft ein Verfahren zur Herstellung eines Lochs gemäß Anspruch 1.

Bei vielen Bauteilen, insbesondere bei Gussteilen, müssen nachträglich Abtragungen wie Vertiefungen oder Durchgangslöcher erzeugt werden. Insbesondere bei Turbinenbauteilen, die zur.Kühlung Filmkühllöcher aufweisen, werden nach der Herstellung des Bauteils Löcher nachträglich eingefügt.

Solche Turbinenbauteile weisen oft auch Schichten auf, wie z.B. eine metallische Schicht oder Zwischenschicht und/oder eine keramische äußere Schicht. Die Filmkühllöcher müssen dann durch die Schichten und das Substrat (Gussteil) hindurch erzeugt werden.

Die US-PS 6,172,331 sowie die US-PS 6,054,673 offenbaren eine Laserbohrmethode, um in Schichtsystemen Löcher einzufügen, wobei ultrakurze Laserpulslängen verwendet werden.
Es wird aus einem bestimmten Laserpulslängenbereich eine Laserpulslänge ausgesucht und damit das Loch erzeugt.

Die DE 100 63 309 A1 offenbart ein Verfahren zur Herstellung einer Kühlluftöffnung mittels eines Lasers, bei dem die Laserparameter so eingestellt werden, dass Material durch Sublimieren abgetragen wird.

Die US-PS 5,939,010 offenbart zwei alternative Verfahren zur Erzeugung einer Vielzahl von Löchern. Bei dem einen Verfahren (Fig. 1, 2 der US-PS) wird zuerst vollständig ein Loch erzeugt, bevor das nächste Loch erzeugt wird. In dem zweiten Verfahren werden die Löcher schrittweise erzeugt, indem zuerst ein erster Teilbereich eines ersten Lochs, dann ein erster Teilbereich eines zweiten Lochs usw. erzeugt wird (Fig. 10 der US-PS). Dabei können bei den zwei Verfahren unterschiedliche Pulslängen verwendet werden, aber immer die gleichen Pulslängen innerhalb eines Verfahrens. Die zwei Verfahren können nicht miteinander verknüpft werden.
Die Querschnittsfläche des abzutragenden Bereichs entspricht immer dem Querschnitt des herzustellenden Lochs.

Die US-PS 5,073,687 offenbart die Verwendung eines Lasers zur Herstellung eines Lochs in einem Bauteil, das aus einem Substrat mit beidseitiger Kupferschicht gebildet ist. Dabei wird zuerst mittels längerer Pulsdauer ein Loch durch einen Kupferfilm erzeugt und dann mittels kürzerer Pulse ein Loch in dem Substrat, bestehend aus einem Harz, wobei anschließend ein Loch durch eine Kupferschicht auf der Rückseite mit höherer Ausgangsleistung des Lasers erzeugt wird. Die Querschnittsfläche des abgetragenen Bereichs entspricht dem Querschnitt des herzustellenden Lochs.

Die US-PS 6,479,788 B1 offenbart ein Verfahren zur Herstellung eines Lochs, bei dem in einem ersten Schritt längere Pulslängen verwendet werden als in einem weiteren Schritt. Die Pulsdauer wird hier variiert, um eine möglichst gute Rechteckform im Loch herzustellen. Dabei wird auch die Querschnittsfläche des Strahls bei abnehmender Pulslänge vergrößert.

Ein weiteres Laserbohrverfahren ist in der EP 1 062 070 B1 offenbart.
Die Verwendung von solchen ultrakurzen Laserpulsen ist wegen deren geringen mittleren Leistungen teuer und sehr zeitintensiv.

Es ist daher Aufgabe der Erfindung dieses Problem zu überwinden.

Die Aufgabe wird gelöst durch ein Verfahren gemäß Anspruch 1.

In den Unteransprüchen des Verfahrens sind weitere vorteilhafte Maßnahmen des Verfahrens aufgelistet.
Die in den Unteransprüchen aufgelisteten Maßnahmen können in vorteilhafter Art und Weise beliebig miteinander kombiniert werden.

Die Unterteilung eines Lochs bei der Herstellung in einen unteren Bereich und einen äußeren Diffusor sowie die Aufteilung in endkonturnahe und Endkonturherstellung des unteren Bereichs und des Diffusors ergeben eine schnellere Herstellung des Lochs in einem Bauteil.

Die Erfindung wird anhand der Figuren näher erläutert.

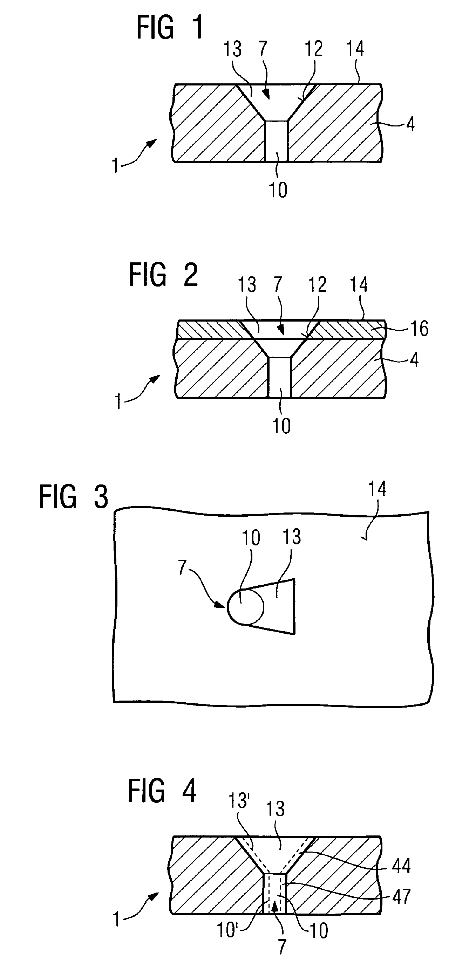

Es zeigen
- Figur 1: ein Loch in einem Substrat,
- Figur 2: ein Loch in einem Schichtsystem,
- Figur 3: eine Draufsicht auf ein herzustellendes Durchgangsloch,

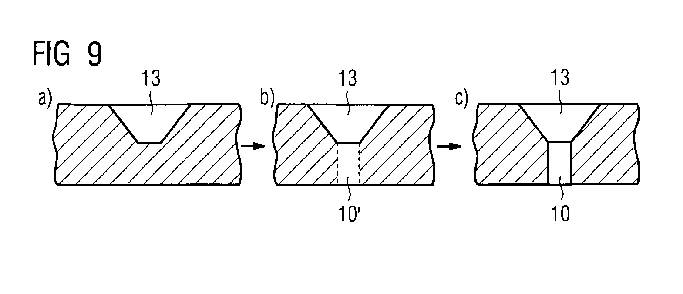

- Figur 4, 9: Abtragungsschritte erfindungsgemäßer Verfahren,

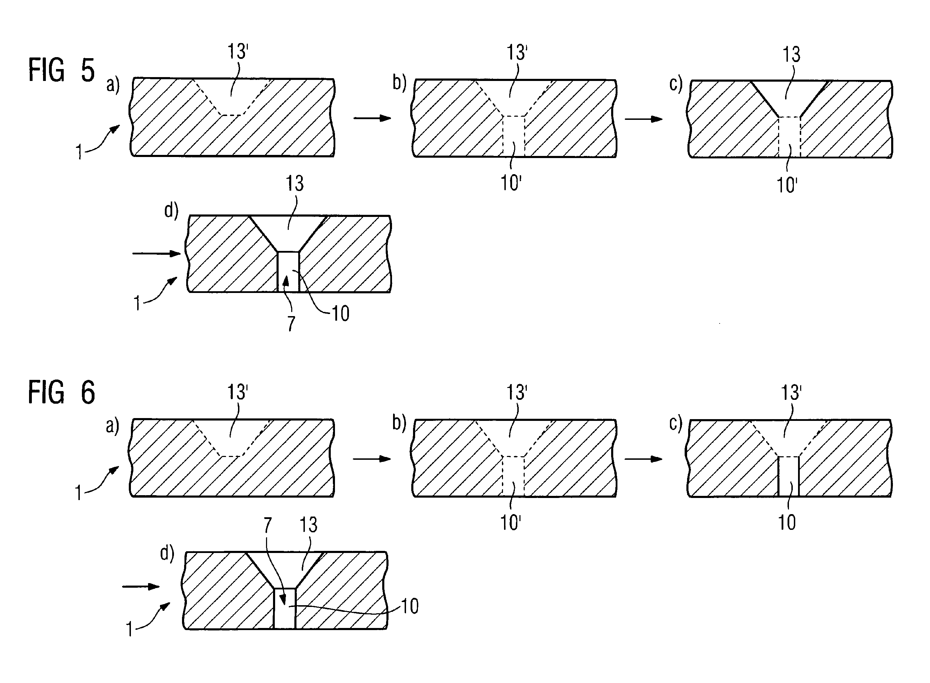

- Figur 5 - 8: Lochbohrverfahren,

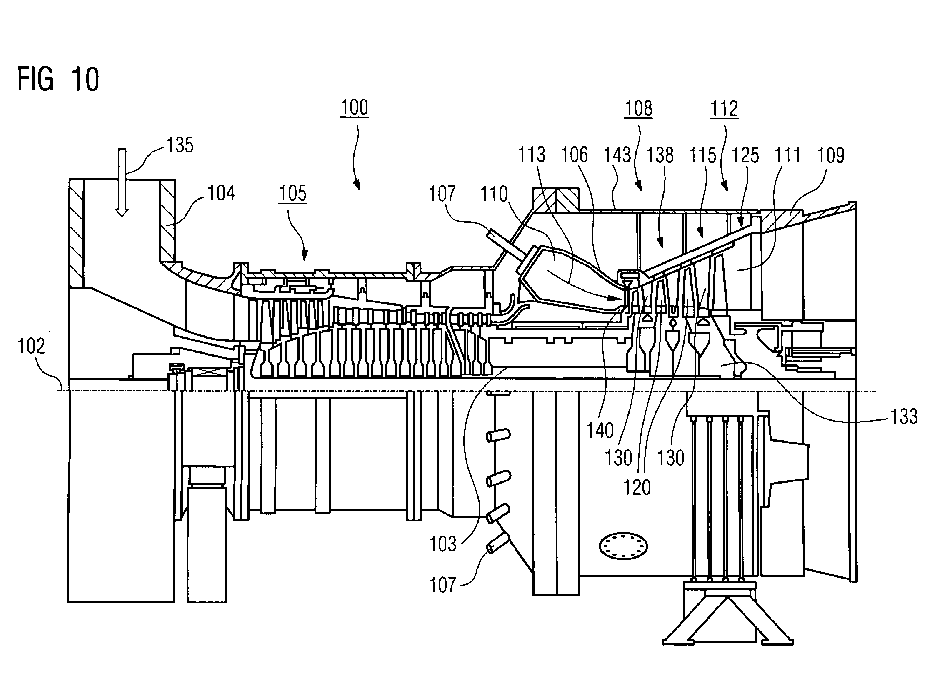

- Figur 10: eine Gasturbine,

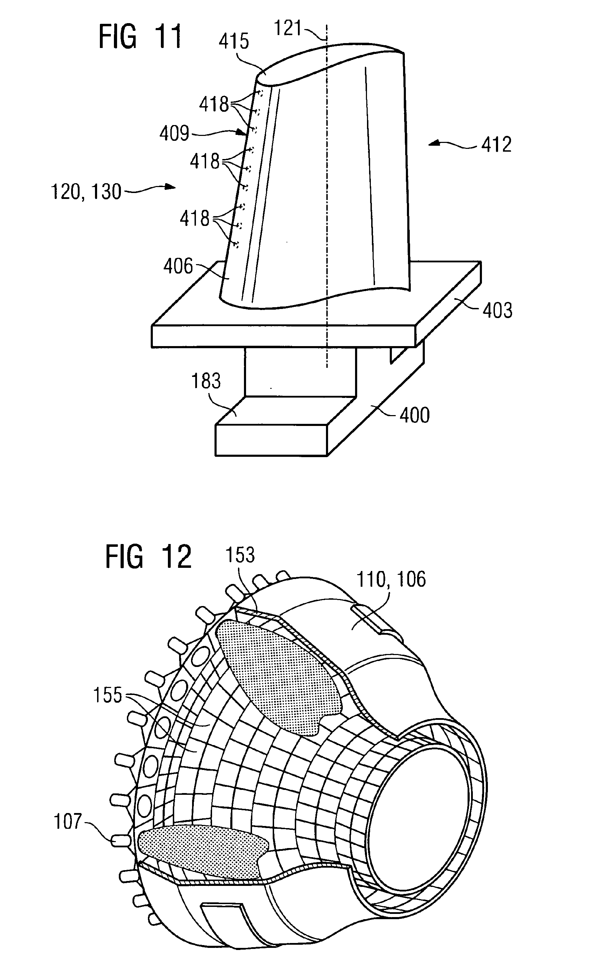

- Figur 11: eine perspektivische Ansicht einer Turbinenschaufel und
- Figur 12: eine perspektivische Ansicht einer Brennkammer.

### Beschreibung des Bauteils mit Loch

Figur 1 zeigt ein Bauteil 1 mit einem Loch 7.
Das Bauteil 1 besteht aus einem Substrat 4 (beispielsweise ein Gussteil oder DS- bzw. SX-Bauteil).
Das Substrat 4 kann metallisch und/oder keramisch sein. Insbesondere bei Turbinenbauteilen, wie z.B. Turbinenlauf- 120 oder -leitschaufeln 130 (Fig. 11, 12), Hitzeschildelementen 155 (Fig. 13) sowie anderen Gehäuseteilen einer Dampf- oder Gasturbine 100 (Figur 11), aber auch einer Flugzeugturbine, besteht das Substrat 4 aus einer nickel-, kobalt- oder eisenbasierten Superlegierung. Bei Turbinenschaufeln für Flugzeuge besteht das Substrat 4 beispielsweise aus Titan oder einer Titan-Basislegierung.
Das Substrat 4 weist ein Loch 7 auf, das beispielsweise ein Durchgangsloch ist. Es kann aber auch ein Sackloch sein.
Das Loch 7 besteht aus einem unteren Bereich 10, der von einer Innenseite des Bauteils 1 ausgeht und der beispielsweise symmetrisch (beispielsweise kreisförmig, oval oder rechteckförmig) ausgebildet ist, und einem oberen Bereich 13, der gegebenenfalls als Diffusor 13 an einer äußeren Oberfläche 14 des Substrats 4 ausgebildet ist. Der Diffusor 13 stellt eine Verbreiterung des Querschnitts gegenüber dem unteren Bereich 10 des Lochs 7 dar.
Das Loch 7 ist vorzugsweise ein Filmkühlloch. Insbesondere die innen liegende Oberfläche 12 des Diffusors 13, also im oberen Bereich des Lochs 7, soll glatt sein, weil Unebenheiten unerwünschte Turbulenzen, Umlenkungen erzeugen, um ein optimales Ausströmen eines Mediums, insbesondere eines Kühlmediums aus dem Loch 7 zu ermöglichen. An die Qualität der Lochoberfläche im unteren Bereich 10 des Lochs 7 werden deutlich geringere Anforderungen gestellt, da das Anströmverhalten hierdurch nur wenig beeinflusst wird.

Figur 2 zeigt ein Bauteil 1, das als Schichtsystem ausgeführt ist.
Auf dem Substrat 4 ist zumindest eine Schicht 16 vorhanden. Dies kann beispielsweise eine metallische Legierung des Typs MCrAlX sein, wobei M für zumindest ein Element der Gruppe Eisen, Kobalt oder Nickel steht. X steht für Yttrium und/oder zumindest ein Element der Seltenen Erden.
Die Schicht 16 kann auch keramisch sein.

Auf der MCrAlX-Schicht kann noch eine weitere Schicht (nicht dargestellt) vorhanden sein, beispielsweise eine keramische Schicht, insbesondere eine Wärmedämmschicht.
Die Wärmedämmschicht ist beispielsweise eine vollständig oder teilstabilisierte Zirkonoxidschicht, insbesondere eine EB-PVD-Schicht oder plasmagespritzte (APS, LPPS, VPS), HVOF oder CGS (cold gas spraying) Schicht.

In dieses Schichtsystem 1 wird ebenfalls ein Loch 7 mit dem unteren Bereich 10 und dem Diffusor 13 eingebracht.

Die vorstehenden Ausführungen zur Herstellung des Lochs 7 gelten für Substrate 4 mit und ohne Schicht 16 oder Schichten 16.

Die Figur 3 zeigt eine Draufsicht auf ein Loch 7 gemäß Figur 1 oder 2.
Das Loch 7 kann auch unter einem spitzen Winkel zur Oberfläche 14 des Bauteils 1 verlaufen.

### Abfolge der herzustellenden Bereiche eines Lochs

Figur 4 zeigt das Loch 7 in seiner gewünschten Endkontur von Diffusor 13 und unterem Bereich 10, wobei gestrichelt angedeutet sind die Bereiche 10', 13', die der endkonturnahen Form entsprechen.

Endkonturnah bedeutet in diesem Zusammenhang, dass ausgehend von einer Oberfläche der Endkontur des unteren Bereichs 10 und des Diffusors 13 noch eine bestimmte Schichtdicke, beispielsweise einige µm dick, noch vorhanden ist. Jedenfalls ist das Loch 7 hinter der endkonturnahen Form gegenüber der Endkontur verjüngt, wobei die Schichtdicke so ausgebildet ist, dass mit dem Bearbeitungsverfahren zur endkonturnahen Form gewährleistet ist, dass das Loch 7 nicht über sein Endkontur verbreitert wird. Endkonturnah bedeutet auch, dass noch eine weitere Bearbeitung erfolgen muss.

Figur 5 zeigt eine erfindungsgemäße zeitliche Abfolge der herzustellenden Bereiche des Lochs 7.

In einem ersten Arbeitsschritt a) wird ein Teilbereich 13' in einer endkonturnahen Form des Diffusors 13 hergestellt.
Dabei können längere Pulsdauern, insbesondere größer 500ns verwendet werden. Vorzugsweise wird der Laser 19' (Fig. 2) nicht in der XY-Ebene verfahren.

In einem weiteren Verfahrensschritt b) wird die endkonturnahe Form 10' des unteren Bereichs 10 erzeugt.
Dabei werden vorzugsweise längere Puldauern größer 500ns verwendet, wobei vorteilhafterweise der Laserstrahl oder der Elektronenstrahl nicht verfahren wird und das so genannte Laserschlagbohren hier angewendet wird. So kann der größte Teil des herzustellenden Lochs 7 sehr schnell hergestellt werden.

In einem weiteren Verfahrensschritt c) wird die Endkontur des Diffusors 13 hergestellt.
Dabei werden vorzugsweise kürzere Pulszeiten verwendet, die insbesondere kleiner 500ns, insbesondere 300ns betragen. Der Laser 19, 19' wird dabei vorzugsweise in der XY-Ebene verfahren.

Im letzten Arbeitsschritt d) wird die Endkontur des unteren Bereichs 10 hergestellt.
Dabei kann das Laserschlagbohren mit längeren Pulslängen, insbesondere >500ns verwendet werden oder es werden ebenfalls kürzere Pulslängen ≤500ns verwendet, wobei dann der Laserstrahl oder der Elektronenstrahl auch wieder in der XY-Ebene verfahren wird.

Die Schritte c) und d) können auch vertauscht werden (Fig. 6) .

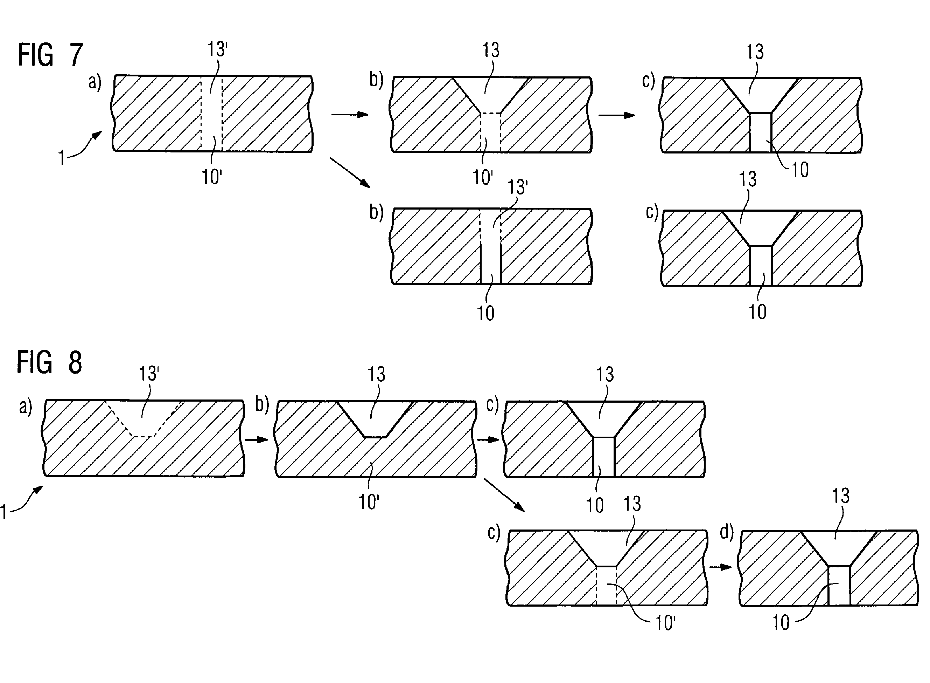

Die endkonturnahe Form 13' des Diffusors 13 kann auch der Geometrie des unteren Bereichs 10' in seiner endkonturnahen Form entsprechen, da der Diffusor 13 immer eine Verbreiterung des Querschnitts des unteren Bereichs darstellt.
Wenn also der untere Bereich ein Loch mit einem konstanten Durchmesser ist, so wird für die endkonturnahe Form 10' des unteren Bereichs ein Loch mit einem etwas kleineren Durchmesser erzeugt, wobei dieser Durchmesser dann auch die endkonturnahe Form 13' des Diffusors 13 darstellt (Fig. 7). Dabei werden längere Pulslängen verwendet, insbesondere größer 500ns, was dem so genannten Laserschlagbohren entspricht. Für die Weiterbearbeitung gibt es zwei Möglichkeiten.
In einem ersten weiteren Verfahrensschritt wird die Endkontur des Diffusors 13 hergestellt und dann die Endkontur des unteren Bereichs 10 oder in einer zweiten Alternative wird zuerst die Endkontur des unteren Bereichs 10 und dann die Endkontur 13 des Diffusors hergestellt (Fig. 7).

Figur 8 zeigt weitere Ausführungsbeispiele der Erfindung.
In einem ersten Schritt wird die endkonturnahe Form 13' des Diffusors 13 hergestellt, insbesondere mit längeren Pulslängen.
In einem weiteren Verfahrensschritt wird die Endkontur des Diffusors 13 hergestellt (Verfahrensschritt b). Dies erfolgt durch die Verwendung von kürzeren Pulslängen, wobei die Laser oder Elektronenstrahlen insbesondere in der Ebene der Oberfläche, in der der Diffusor angeordnet ist, verfahren werden. In einer ersten Alternative wird der untere Bereich 10 mit längeren Pulslängen in seiner Endkontur hergestellt.
In einer weiteren Alternative (c), d)) kann im Verfahrensschritt c) zuerst eine Endkontur des unteren Bereichs 10 erzeugt werden, wobei dies mit längeren Pulslängen erfolgt.

In einem letzten Verfahrensschritt d) wird dann die Endkontur des unteren Bereichs 10 erzeugt, wobei dies insbesondere mit kürzeren Pulslängen erfolgt.

Figur 9 zeigt ein weiteres Ausführungsbeispiel des erfindungsgemäßen Verfahrens.
In einem ersten schritt a) wird die Endkontur des Diffusors 13 hergestellt, wobei insbesondere die kürzeren Pulslängen verwendet werden.
In einem weiteren Verfahrensschritt b) wird die endkonturnahe Form 10' des unteren Bereichs 10 hergestellt. Dies erfolgt mit längeren Pulslängen.
In einem letzten Verfahrensschritt c) wird die Endkontur des unteren Bereichs 10 hergestellt, wobei dies insbesondere mit kürzeren Wellenlängen erfolgt.
Bei der Herstellung des endkonturnahen Bereichs 10' und der Endkontur des unteren Bereichs 10 können auch nur längere Pulslängen verwendet werden, wobei dann im Verfahrensschritt b) die Querschnittsfläche, die durch den Laserstrahl oder Elektronenstrahl abgetragen wird, nicht dem Durchmesser des unteren Bereichs entsprechen. Dann wird im Verfahrensschritt der Strahl der Laser oder der Elektronen so aufgeweitet, dass ein Querschnitt abgetragen wird, der der Endkontur des unteren Bereichs 10 entspricht.

Vorzugswiese werden also für die Herstellung einer endkonturnahen Form des Diffusors oder des unteren Bereichs längere Pulslängen verwendet oder der Strahl so eingestellt, dass er nicht die Endkontur ergibt.
Vorzugsweise werden dann für die Herstellung der Endkontur kürzere Pulslängen verwendet oder der Strahl wird bei längeren Pulslängen so eingestellt, dass die gewünschte Kontur ergibt.

### Laserparameter

Bei der Verwendung von Pulsen mit einer bestimmten Pulslänge ist die Ausgangsleistung des Lasers 19', 19" beispielsweise konstant.
Bei den längeren Pulslängen wird eine Ausgangsleistung des Lasers 19', 19" von mehreren 100 Watt, insbesondere 500 Watt verwendet.
Bei den kürzeren Laserpulslängen wird eine Ausgangsleistung des Lasers 19', 19" von kleiner 300 Watt verwendet.
Ein Laser 19', 19" mit einer Wellenlänge von 532 nm wird beispielsweise nur zur Erzeugung kürzerer Laserpulse verwendet.
Bei den längeren Laserpulslängen werden insbesondere eine Laserpulsdauer von 0,4ms und eine Energie (Joule) des Laserpulses von 6J bis 10J, insbesondere 8J verwendet, wobei eine Leistung (Kilowatt) von 10kW bis 50kW, insbesondere 20kW bevorzugt wird.
Die kürzeren Laserpulse weisen eine Energie im einstelligen oder zweistelligen Millijoule-Bereich (mJ) auf, vorzugsweise im einstelligen Millijoule-Bereich, wobei die verwendete Leistung insbesondere meist im einstelligen Kilowattbereich liegt.

### Anzahl Laser

Bei dem Verfahren können ein Laser bzw. zwei oder mehr Laser 19', 19" verwendet werden, die gleichzeitig oder nacheinander eingesetzt werden. Die ähnlichen oder verschiedenen Laser 19', 19" weisen beispielsweise verschiedene Bereiche hinsichtlich ihrer Laserpulslängen auf. So kann z.B. ein erster Laser 19' Laserpulslängen kleiner gleich 500ns, insbesondere kleiner 100ns erzeugen und ein zweiter Laser 19" Laserpulslängen größer 100ns, insbesondere größer 500ns erzeugen.

Zur Erzeugung eines Lochs 7 wird zuerst der erste Laser 19' eingesetzt. Für die weitere Bearbeitung wird dann der zweite Laser 19'' verwendet oder umgekehrt.

Bei der Herstellung des Durchgangslochs 7 kann auch nur ein Laser verwendet werden. Insbesondere wird ein Laser verwendet, der beispielsweise eine Wellenlänge von 1064nm aufweist und der sowohl die längeren als auch die kürzeren Laserpulse erzeugen kann.

### Bauteile

Die Figur 10 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 11 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein.

Wenn die Schaufel 120, 130 gekühlt werden soll, ist sie hohl und weist ggf. noch Filmkühllöcher 418 (gestrichelt angedeutet) auf, die mit dem erfindungsgemäßen Verfahren hergestellt werden.

Die Figur 12 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf, die mit dem erfindungsgemäßen Verfahren hergestellt werden.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zur Herstellung eines Lochs (7) in einem Bauteil (1, 120, 130, 155),
insbesondere in einem Schichtsystem,
in mehreren Arbeitsschritten,
wobei das herzustellende Loch (7) aus
einem unteren Bereich (10),
der insbesondere symmetrisch ist, und
einem äußeren Diffusor (13),
der insbesondere asymmetrisch ist,
besteht,
**dadurch gekennzeichnet,**
**dass** zuerst der Diffusor (13) in seiner Endkontur hergestellt wird,
**dass** dann eine endkonturnahe Herstellung (10') des unteren Bereichs (10) erfolgt,
und **dass** dann der untere Bereich (10) in seiner Endkontur hergestellt wird.

2. Verfahren nach Anspruch 1,
**dadurch gekennzeichnet, dass**
Laserstrahlen zumindest eines Lasers (19', 19") zur Herstellung des Lochs (7) verwendet werden,
die gepulst werden können und dabei eine Pulslänge aufweisen.

3. Verfahren nach Anspruch 1,
**dadurch gekennzeichnet, dass**
Elektronenstrahlen zur Herstellung des Lochs (7) verwendet werden,
die gepulst werden können und dabei eine Pulslänge aufweisen.

4. Verfahren nach Anspruch 2 oder 3,
**dadurch gekennzeichnet, dass**
zur Herstellung der endkonturnahen Form (13') des Diffusors (13) längere Pulslängen,
insbesondere > 500ns,
verwendet werden.

5. Verfahren nach Anspruch 2 oder 3,
**dadurch gekennzeichnet, dass**
zur Herstellung der endkonturnahen Form (13') des Diffusors (13) kürzere Pulslängen,
insbesondere ≤ 500ns,
verwendet werden.

6. Verfahren zur Herstellung nach Anspruch 2, 3, 4 oder 5,
**dadurch gekennzeichnet, dass**
zur Herstellung der endkonturnahen Form (10') des unteren Bereichs (10) längere Pulslängen,
insbesondere > 500ns,
verwendet werden.

7. Verfahren nach Anspruch 2, 3, 4, 5 oder 6,
**dadurch gekennzeichnet, dass**
zur Herstellung der Endkontur des Diffusors (13) kürzere Pulslängen verwendet werden,
insbesondre ≤ 500ns.

8. Verfahren nach Anspruch 2, 3, 4, 5, 6 oder 7,
**dadurch gekennzeichnet, dass**
zur Herstellung der Endkontur des unteren Bereichs (10) kürzere Pulslängen,
insbesondere ≤ 500ns,
verwendet werden.

9. Verfahren nach Anspruch 2, 3, 4, 5, 6, 7 oder 8,
**dadurch gekennzeichnet, dass**
zur Herstellung der Endkontur des unteren Bereichs (10) längere Pulslängen,
insbesondere > 500ns,
verwendet werden.

10. Verfahren nach Anspruch 1,
**dadurch gekennzeichnet, dass**
der untere Bereich (10) symmetrisch ist.

11. Verfahren nach Anspruch 1,
**dadurch gekennzeichnet, dass**
der äußere Diffusor (13) asymmetrisch ist.

12. Verfahren nach Anspruch 5, 7, oder 8,
**dadurch gekennzeichnet, dass**
bei der Verwendung von kürzeren Pulsen der Laser- oder Elektronenstrahl in einer xy-Ebene verfahren wird.

13. Verfahren nach Anspruch 5, 7 oder 8,
**dadurch gekennzeichnet, dass**
bei der Verwendung von längeren Pulsen der Laser- oder Elektronenstrahl nicht in einer xy-Ebene verfahren wird.

14. Verfahren nach Anspruch 1,
**dadurch gekennzeichnet, dass**
ein Bauteil (120, 130, 155) einer Gasturbine (100) bearbeitet wird.
